# EUROPEAN PATENT APPLICATION

(11) **EP 4 023 490 A1**
(43) Date of publication of application: **06.07.2022**
(21) Application number: 21020657.9
(22) Date of filing: 30.12.2021
(51) Int. Cl.: B60N 2/28

(54) **A CHILD CAR SEAT SAFETY HARNESS**

(30) Priority: 30.12.2020 GB 202020735
(71) Applicant: Cordsafe Ltd, Poole, Dorset BH14 0HU (GB)
(72) Inventor: John, Christophe, Poole, Dorset BH14 0HU (GB)
(74) Representative: Humphrey-Evans, Edward John

(57) **Abstract**

The present invention relates to the field of vehicle seats for infants or children. In accordance with a general aspect of the invention, there is provided a child seat system for a vehicle having a child harness, with the harness comprising a plurality of straps provided in at least a three-point harness system, the sensor being arranged to detect when a selected strap is flaccid, whereby to assist in the alerting to a parent or carer that the harness is improperly fastened. The child seat system for a vehicle can provides a warning whether it be audible or visual warning; the warning can be directed through a Bluetooth device, for example reducing the volume of speakers in relation to the play back of songs / discussion or a radio broadcast or otherwise. The warning may be provided with a delay, whereby to enable a period of time to place a child within the seat, with regard to the presence of a seat sensor - such as a weight sensor or thermal sensor.

## Description

### Field of Invention

**001** The present invention relates to the field of infant or child car seats. Specifically, the present invention relates to a child car seat safety harness having a warning arrangement.

### Background to the Invention

**002** Presently, child car seats are presently legally required in most countries across the globe. In the United Kingdom, for example, children must normally use a child car seat until they're 12 years old or 135 centimetres tall, whichever comes first. However, it is when a child is very young - up until the ages of four or five that particular care must be taken to assure their safety. Once a child is placed in a car seat and buckled in, the safety harness needs to be tightened properly to adequately protect the child.

**003** Unfortunately, it is a matter of regularity that a parent has been delayed in their preparations to travel by car; older and younger siblings can tend to distract a parent in their attempt to harness a child. A harness that's too tight may make breathing difficult for the child. Notwithstanding this, it is a more common scenario that a harness is not attached correctly such that it is too loose which may cause injuries to the child in the event of a car crash. The looser the harness is on the child, the greater the chances of the child being ejected from the car seat. Manufacturers have several different methods to test for proper tightening, but all these tests rely on human judgment. For instance, one common practice is the "harness pinch test" which requires the user to pinch the harness straps. If the user is able to form a loop or fold in the straps, the harness is too loose. Another test is a finger test which requires the user to place his or her fingers under the harness at the collarbone level. If more than one or two fingers can fit under the harness, it is too loose. These methods are somewhat subjective and are typically omitted in actual everyday use. It is also pertinent to point out that the size of a child when initially fitted to a seat will grow and a harness system will also need to be adjusted so as to ensure that the fit of a harness is complementary to the size of the child to be restrained within the child seat.

**004** Deaths of children younger than 13 in motor vehicle crashes have declined since 1975. Data from the United Kingdom Department for Transport shows that the number of deaths and serious injuries in 2011 was 21% lower than the average for 2005-09. Although this change is extremely positive, there is still work to be done to prevent children and young people from dying on the roads. Road accidents remain the leading cause of accidental death for children and they can cause life-changing injuries including loss of limbs, spinal injuries and head injuries. In 2011, 2,412 children aged 0-15 years were killed or seriously injured on Britain's roads - that's an average of 7 children every day. There were 60 child fatalities in road accidents in 2011. Most crash deaths occur among children traveling as passenger vehicle occupants, and proper restraint use can reduce these fatalities. Restraining children in rear seats instead of front seats reduces fatal injury risk by about three-quarters for children up to age 3, and almost half for children ages 4 to 8. According to a 2012 survey performed in the United States, in 2012, the National Highway Traffic Safety Administration (NHTSA), advised that "a loose harness' was one of the top 5 most significant and common mistakes made when using car seats. Consequently, what is needed is a system which automatically or otherwise indicates to the child-minder that the child car seat harness has been properly tightened. Inventor has determined that the only warning system vis-à-vis infant and car seats provides a warning in the event that when a parent forgets that they have been driving with a infant in a car and if they subsequently leave the infant locked in the car - which could be very hot or cold and be parked for several hours. The device located by Inventor provides a weight sensing system that notifies absentminded parents if they try walking away from their car, sans infant, and includes a wireless key ring alarm unit.

### Object of the Invention

**005** The present invention seeks to provide a solution to the problems addressed above. The present invention seeks to provide a child seat arrangement that can provide a ready indication of a state of fastening.

### Statement of Invention

**006** In accordance with a general aspect of the invention, there is provided a child seat system for a vehicle having a child harness, with the harness comprising a plurality of straps provided in at least a three-point harness system, the sensor being arranged to detect when a selected strap is flaccid, whereby to assist in the alerting to a parent or carer that the harness is improperly fastened.

**007** The child seat system for a vehicle can provides a warning whether it be audible or visual warning; the warning can be directed through a Bluetooth device, for example reducing the volume of speakers in relation to the play back of songs / discussion or a radio broadcast or otherwise. The warning may be provided with a delay, whereby to enable a period of time to place a child within the seat, with regard to the presence of a seat sensor - such as a weight sensor or thermal sensor.

**008** The harness can comprise a plurality of straps. Conveniently there is provided a five-point harness system.

**009** The seat system can further be provided with a sensor operable to detect the coupling and uncoupling of a buckle.

**0010** The child seat system for a vehicle in accordance with the invention can be selected from one of an automobile, a bus, a perambulator, carrycot or buggy.

**0011** Conveniently, the child seat system for a vehicle is provided with an ISOFix connector system, whereby to enable association of the seat with a vehicle having ISOFIX connection points, be it an ordinary car or a perambulator.

**0012** The present invention is conveniently provided with an ISOFix base, whereby to enable association of the car seat with a vehicle having ISOFIX connection points, whereby to provide a solid yet releasable connection between the car seat and the car body or the stroller seat and a perambulator frame. ISOFix is an international standard of built-in attachment points in a car's structure, designed to fit a child seat.

**0013** The present invention can comprise a child seat system for a vehicle wherein at least one strap is tensioned in use to restrain movement of the child, the seat system having a tension indicator and an alarm, the tension indicator being operably arranged to apply a lateral force upon said strap, wherein upon a measurement of a predetermined reduction in said lateral force, being indicative of a reduction in tension of the strap, an alert can be indicated to a parent or carer occupant of the vehicle.

**0014** The present invention can comprise a child seat system for a vehicle wherein at least one strap is tensioned in use to restrain movement of the child, the seat system having an axial tension indicator and an alarm, the tension indicator being operably arranged to provide an alert upon the axial force tension of the strap being reduced by a predetermined amount, whereby to enable an alert to be made to a parent or carer occupant of the vehicle.

### Brief Description of the Figures

**0015** For a better understanding of the present invention, reference will now be made, by way of example only, to the Figures as shown in the accompanying drawing sheets, wherein:-
Figures 1A & 1B show two types of prior art toddler / child seats;
Figure 2A - 2E illustrates typical steps in the securement of a toddler in a car seat;
Figure 3A - 3I illustrates typical steps in the securement of a small child in a car seat;
Figure 4A - 4D show views of alternative adjustment mechanisms;
Figures 5A & 5B show detailed views of a first embodiment of the invention;
Figures 6A - 6D show detailed views of two further embodiments in accordance with the present invention; and,
Figure 7 represent a flow chart indicating a method of operation of a number of modes of the present invention.

### Detailed description of the Preferred Embodiments

**0016** There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

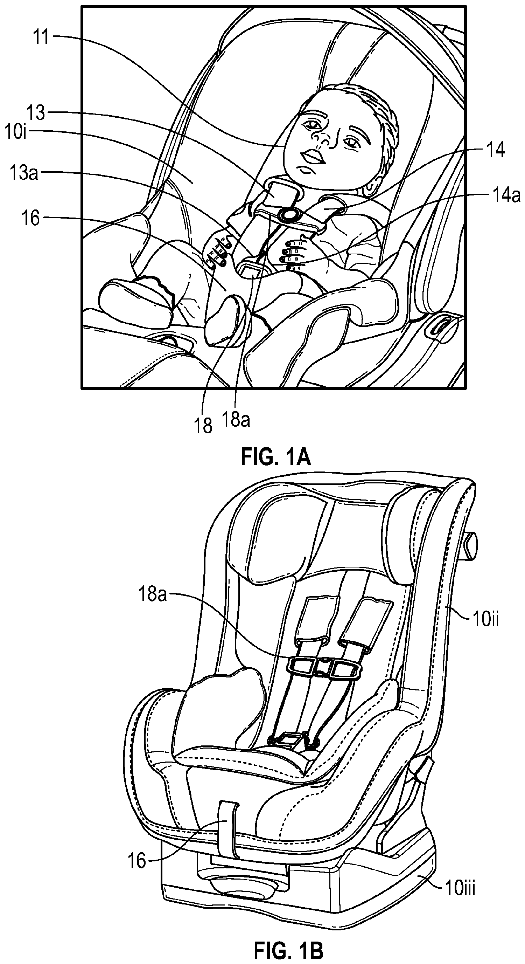

**0017** Figure 1a shows an example of a toddler seat 10i of the style that can be used as a car seat when associated with a car and with a perambulator arrangement when associated with its perambulator frame. In this instance, a toddler 11 is shown sitting in the seat 10i. The straps 13, 14 comprise the upper arms of a strap arrangement of a general "Y" configuration, with the single leg strap element 16 of the general "Y" configuration extending through a friction clasp mechanism. Buckle 18 is attached to a base element of the seat, midway across the front of the seat, closely adjacent the friction clasp mechanism. Complementary fastening members 13a and 14a associated, respectively, with straps 13 and 14, are shown in an engaged state with buckle 18. The portions of the straps 13 and 14 that are close to the buckle are retained together by a strap positioning slide 18a, to assist in ensuring that the straps 13 & 14 are parallel, to assist with the fastening of the fastening members with the buckle.

**0018** Figure 1B shows an alternative car seat 10ii, suitable for a 2 -5 year old child, having a base 10iii that enables the seat to be pivotally adjusted. In common with seat 10i, seat 10ii is provided with straps 13, 14 arranged in a general "Y" configuration, with the lower portions being associated with a clasp that single leg element of the general "Y" configuration extending through a friction clasp mechanism. Buckle 18 is attached to a base element of the seat, midway across the front of the seat, closely adjacent the friction clasp mechanism. Complementary fastening members 13a and 14a associated, respectively, with straps 13 and 14 are shown in an engaged state with buckle 18. The portions of the straps 13 and 14 that are close to the buckle are retained together by a strap positioning slide 18a, to assist in ensuring that the straps 13 & 14 are parallel, to assist with the fastening of the fastening members with the buckle and to maintain the straps as close to the body of the child as possible, to ensure safe retention of the child.

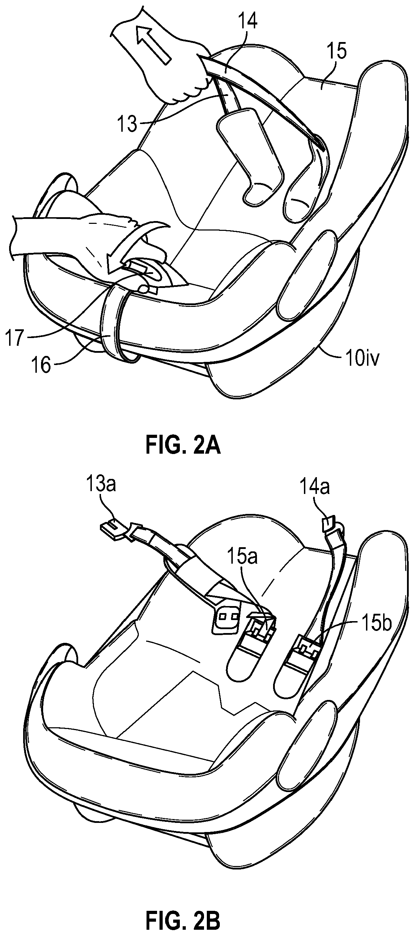

**0019** Figure 2A shows an example of a toddler seat 10iv, prior to placement of a toddler, the shoulder straps 13, 14 are pulled away from a back 15 of the seat 10. With reference to Figure 2B, it can be seen that the shoulder straps pass through respective apertures 15a, b in the back of the seat. It is recommended that the shoulders of a child are below the slots that are provided in the back 15 of the seat; equally the ears of the child should be below a top of the back and any headrest - otherwise the child is too large for the child restraint or the seat needs to be adjusted if the back is adjustable in height.

**0020** Referring again to Figure 2A, and in common with Figures 1A & 1B, the straps 13, 14 comprise the upper arms of a strap arrangement of a general "Y" configuration - noting that this is hidden from view on the reverse side of the seat back 15, with the single depending strap element 16 extending through a friction clasp mechanism 17 positioned midway across the front of the seat. Not shown in this figure, but a buckle 18 is attached to a base element of the seat, closely adjacent the friction clasp mechanism. The complementary fastening members 13a and 14a associated, respectively, with straps 13 and 14 are shown in figure 1B, and are operably associated with the buckle when fastened as shall be discussed below.

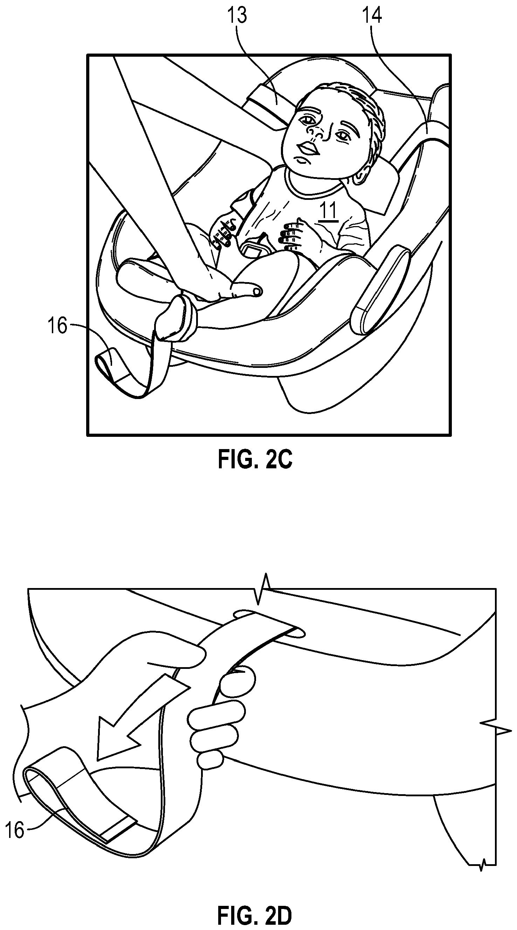

**0021** Figure 2C shows how toddler 11 is placed within the seat 10; the straps are laid across the top of the backrest 15 of the seat such that when the toddler is placed upon the backrest, the straps may subsequently be placed across the chest and stomach regions of the toddler and the fastening members 13a and 14a are inserted into the buckle. It is to be noted that the lower back of the child must abut against the vehicle seat whilst their legs should hang over the edge of the seat in order to feel comfortable. Nonetheless, the child should not be sitting such that their bottom is urged forward, creating a gap between their back and the seat - which will cause the seat belt to ride up out of position; this can also introduce slack in the seat belt which will allow the child to move forward more during a crash. Both of these conditions can cause increased injury in the event of a crash.

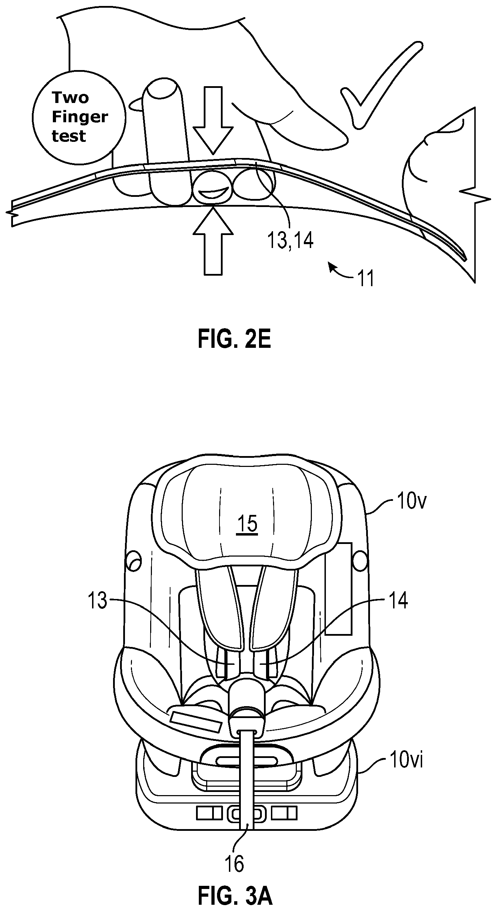

**0022** The fastening members may be arranged so that they can be coupled separately to the buckle; they may be arranged such that they may only connect with the buckle as a unit, to provide an all or nothing fastening arrangement. In any event, once the straps 13 & 14 are coupled to the buckle 18 - and as shown in Figure 2D - the strap 16 is pulled so as to bring the strap members 13 and 14 close to the body of the toddler and secure the toddler with respect to the seat. Figure 2E shows how a test may be performed to provide sufficient degree of fastening by means of straps 13, 14 for the toddler 11. As can be seen, a hand of the parent or carer is shown inserting two fingers between a strap 13, 14 and the abdomen of the child 11 to ensure that the give on the belt is sufficient; it is subjective but ensures that the belt is sufficiently taut. It is not expected that a child will be perfectly still while riding in a car and their movement or readjustment to stay comfortable cannot lead to the seat belt getting out of position. When children placed in a child car seat get uncomfortable they tend to slouch, lean to one side or put the shoulder belt behind them: when the seat belt is out of position, it cannot properly protect the child during a crash.

**0023** Child car seats, in the UK and in most progressive countries, must be used by children for every single journey, no matter how short. This also implies that one must spend time to get one's child comfortably strapped in. The present invention is related to child car seats with an integral harness; the top of the harness should be about 2cm below the shoulder of a child in a rear-facing child car seat, and about 2cm above the shoulder of a child in a forward-facing child car seat. It should be quite tight, so that only one or two fingers can fit between the child's chest and harness. Whilst this appears to be quite a subjective test, it is nonetheless a repeatable and easily performed test and evidence from a number of suppliers and safety groups advocate such a simple test, per: goodeggcarsafety.com, for example, provides advice that: "Harnesses should be tight enough on your child so you can only get two fingers between the child and the harness - with your fingers lying flat against the child's collar bone. Alternatively, you can do the 'pinch test'. First, place your fingers on the harness, around the child's collarbone area. Then try to pinch the harness strap and if you can get a good pinch between your fingers, that means the harness is not tight enough. When you take your child out of their seat, loosen the harness off before you unclip the buckle - that way, when they next go into their seat, you just need to pull the harness tensioner to get the perfect fit".

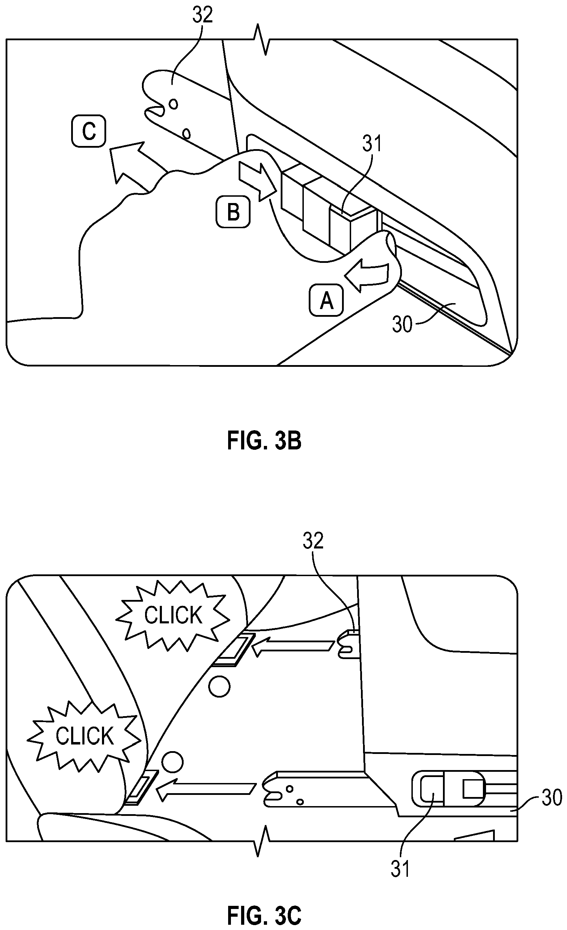

**0024** Figure 3A shows a type of seat 10v suitable for small children not being toddlers; the seats are associated with a base 10vi whereby the angle of inclination of the seat can be varied with respect to the base; ideally the base has ISOFix fastening elements whereby the seat base can be coupled to corresponding receiving sockets recessed within a seat squab of the car (if so configured). If ISOFix elements are not provided, then the seat belt of the car will be employed to fasten the seat to the car. Figures 3b, 3c show how ISOFix fasteners 30 having a slide control 31, conveniently located on a side of the base, operable to release ISOFix elements 32 of the mechanism which subsequently engage with a corresponding ISOFix connections associated with the vehicle.

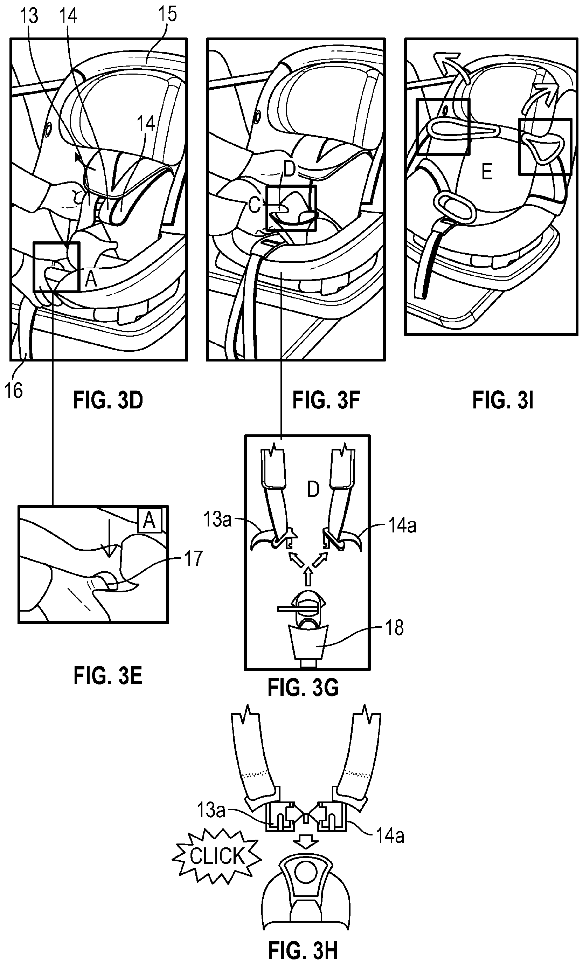

**0025** The seat shown in Figure 3A is exemplified in use with reference to Figures 3D - 3H: In Figure 3D the shoulder straps 13 and 14 are pulled away from the seat back 14 by the left hand of an operator, at the same time a clasp 17 is released by the right had of the operator. Inset figure, Figure 3E, in common with Figures 2A and 2B operate in a similar fashion to the seat shown in Figures 1A - 1E. In this instance, prior to placement of a child 11, the shoulder straps 13, 14 are pulled away from a back 15 of the seat 10. The straps 13, 14 comprise the upper arms of a strap arrangement of a general "Y" configuration, with the single leg strap element 16 extending through a friction clasp mechanism 17. Figure 3F shows a buckle 18 which is attached to a base squab element of the seat, midway across the front of the seat, closely adjacent the friction clasp mechanism 17. Complementary fastening members 13a and 14a associated, respectively, with straps 13 and 14 are shown in Figures 3G and 3H with arrows indicating how the clasps are inserted into the buckle 18 / released when buckle release 18i is pressed, are operably associated with the buckle when fastened as shall be discussed below. Figure 3I shows a seat ready to receive a child within the seat 10v, the straps being laid across the top of the back of the seat such that when the toddler is placed upon the backrest, the straps may subsequently be placed across the chest and stomach regions of the toddler and the fastening members 13a and 14a are inserted into the buckle. It is recommended that the shoulders of a child are below the slots that are provided in the back 15 of the seat; equally the ears of the child should be below a top of the back and any headrest - otherwise the child is too large for the child restraint or the seat needs to be adjusted if the back is adjustable in height.

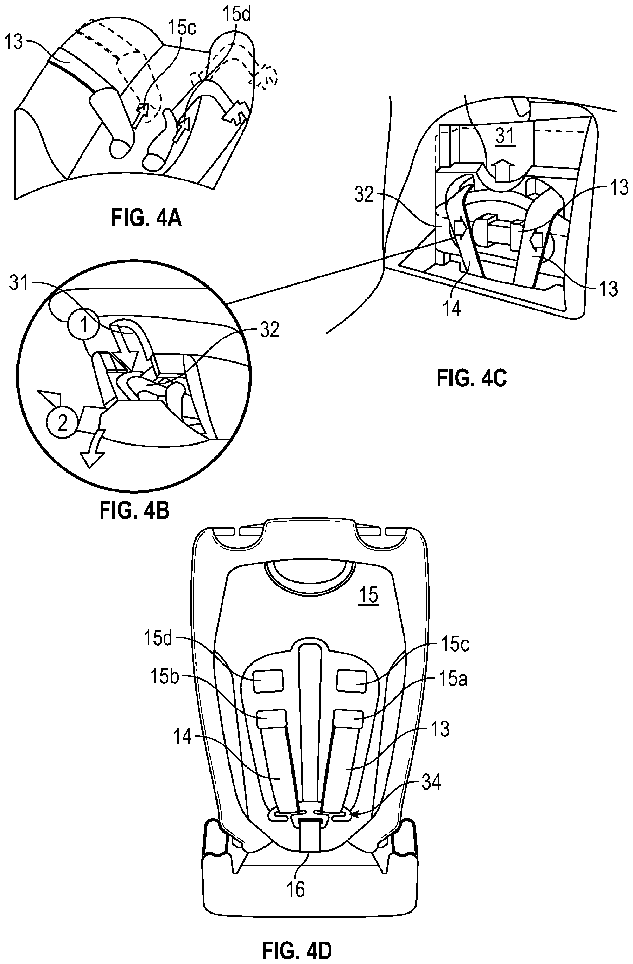

**0026** Figure 4A shows how the straps 13, 14 can be adjusted through the apertures at the upper region of the seat back 15. Figures 4B & 4C detail features of the rear portions of the straps 13 & 14 as viewed from the rear of the seat back 15. Figure 4B shows a release button 31 which enables a slide mechanism 32 to move up and down the rear of the seat back 15. Associated with the mechanism 32, which adjusts the spacing between straps 13 & 14. Straps 13 & 14, as mentioned before, join in a general "Y" arrangement such that a single strap 16 emerges at the front of the seat, as detailed with reference to Figure 4D, with a coupling element 34.

**0027** Notwithstanding the developments of child car seats, none are automatic and need to cater for difference in operating conditions. Clothing can affect how snugly the harness fits, so the harnesses need to be adjusted to take this into account. Additionally, through boredom, improper fitting or otherwise a harness can become loose. Some children go through a phase of slipping out of the harness or releasing the buckle. It is perhaps unnecessary to state that without a child being properly secured the placement of a child in a child car seat is somewhat pointless in having a child car seat. Especially in the case of a very young child, a child might not be able to satisfactorily communicate / indicate a looseness of a harness and of any subsequent irritation.

**0028** Figure 4D shows a feature of the present invention where a sensor 34 provides an indication as to the degree of looseness of the straps; in some embodiments, the sensor can provide an indication of the tautness of the straps whereby to provide an indication as to whether or not the infant / child is correctly strapped in the seat. If the strap is too tight, difficulties in breathing may be encountered; if too loose then the child could escape or otherwise be launched waywardly in the unfortunate situation of an accident.

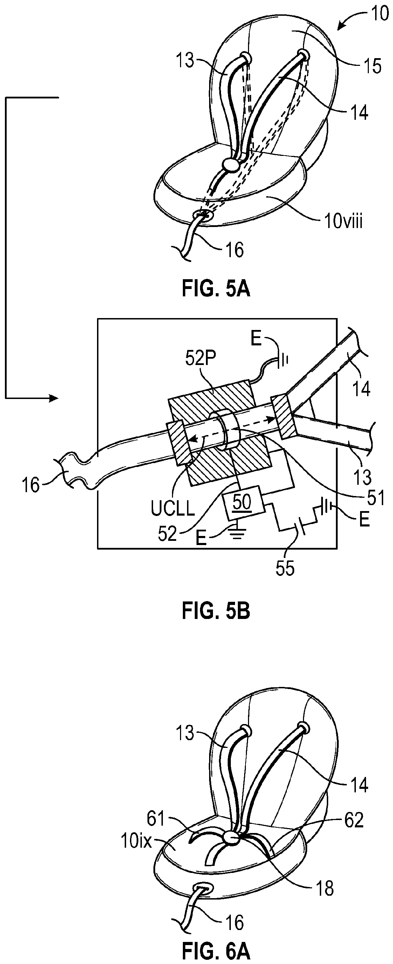

**0029** Referring now to Figures 5A and 5B, there is shown a simplified view indicating how the present invention can be fabricated in a first embodiment. Figure 5A shows a child seat 10vii having a shoulder strap arrangement in the general form of a "Y" and underneath the base seat squab, there is provided a sensor that determines the degree of tautness of the strap 16 in a position below the seat base squab 10viii. In particular, with reference to Figure 5B, the strap having shoulder straps 13 & 14 joining to become a single strap as it passes under the squab 10viii. Sensor 50 is attached to a sleeve element 51 which surrounds the strap 16, by means of a connector; the sensor may be resilient yet biased in a rest position corresponding to a taut sate of the strap - i.e. the connector 52 is essentially rigid; preferably, however, the sensor may be biased in a state of a loose or flaccid strap i.e. the connector tends to draw the strap away from a correct, centrally positioned strap, when taut and a child has been correctly placed in position. Pad 52P being a weight sensor can be provided to provide a failsafe warning - that is to say the alert with regard to fastening of a child only occurs when the weight sensor is activated through sensing the weight of a child in the seat. Figure 5B shows a simple circuit wherein the strap sensor, the weight sensor and the electrical power supply - conveniently a lithium-ion electrical storage cell, although other systems of power supply could be provided, including a power lead from the electrical system of the vehicle. A simplified earth E, is shown, but it will be realized that a separate circuit will be provided since the material of the seat is most likely to be an insulating material.

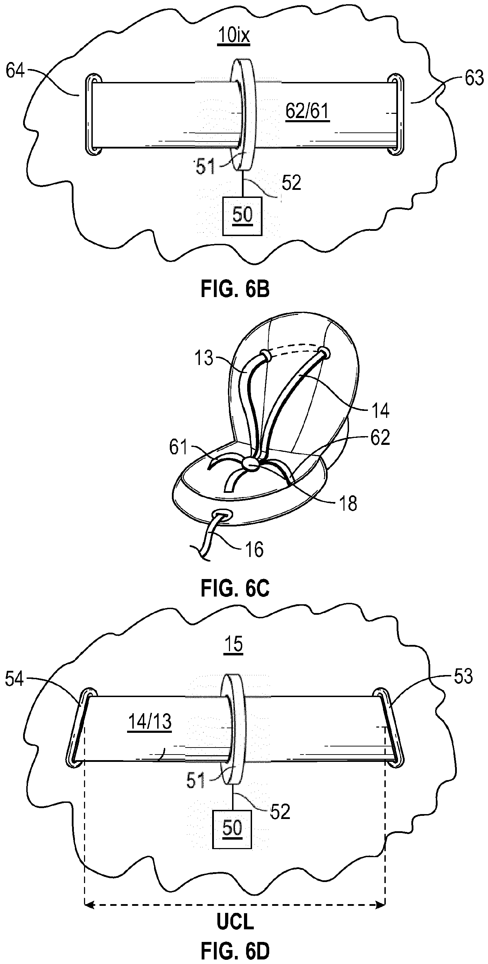

**0030** Figures 6A and 6B relate to a first alternate system, wherein the shoulder straps 13 & 14 are directly connected in a "Y" arrangement as discussed above. Straps 13, 14 are coupled via male buckle members 13a, 14a to side straps 61, 62, respectively, as is the case for some types of five point harness. The straps 61, 62 feed through the seat base 10ix via apertures 63, 64. The belt tension slackness or flaccidity sensor arrangement is mounted on the underside of the seat 10ix, with the sensor 50 being connected via connector 52 to a ring device 51 having a slit through which the strap 61/62 passes. The ring device 51 is conveniently biased towards the sensor such that when the strap 61/62 - that passes from one side to another and which is ordinarily maintained in a horizontal orientation is not taut, the biasing action cases the ring device to move toward the sensor, causing the sensor to register an alarm. The biasing action can be provided by resilient means such as a helical spring or by a magnetic repulsion of similar pole biasing means.

**0031** Figures 6C and 6D relate to a further alternate system, wherein the shoulder straps 13 & 14 are directly connected to one another as is the case for some types of five point harness - where the flaccidity sensor arrangement is mounted with respect to a horizontally arranged lateral strap connected to corresponding straps, 13 and 14, which pass through apertures 53, 54 defined in the upper portion of the seat back 15. In use, the straps are fastened once the buckle 18 has engaged with the male buckle members 13a, 14a associated with the shoulder straps: in this case the side straps 61, 62 are pulled by means of the two straps 16, whereby to ensure that the straps lie closely adjacent the infant or child.

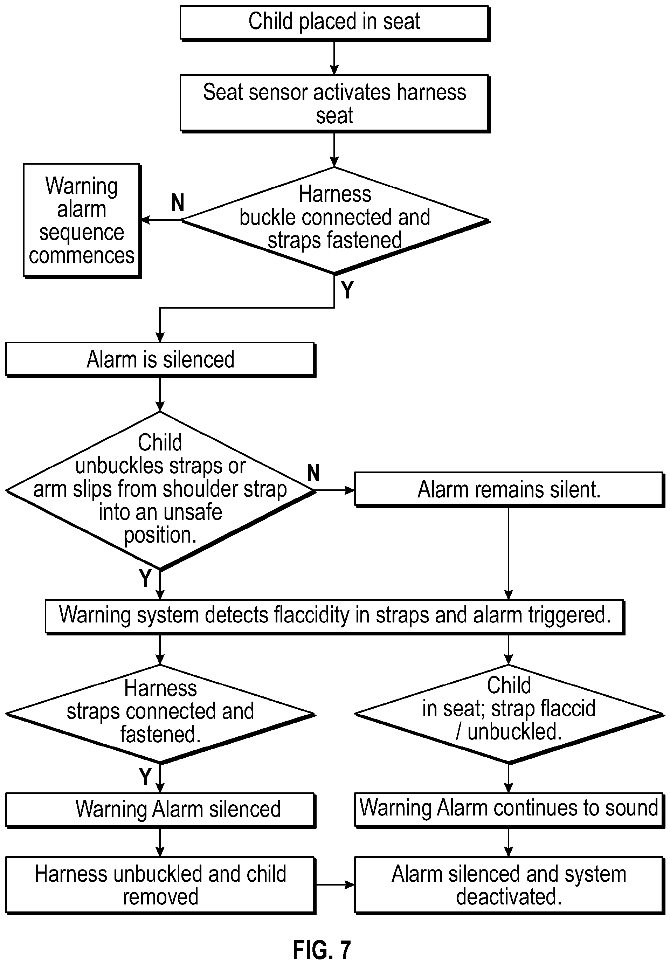

**0032** It will be appreciated that to complete the sensory function - to indicate that a child is in the seat - the buckles could have a connection sensor to complete a circuit or otherwise a weight sensor, heat sensor or other device to indicate the presence of a child can be utilized together with the flaccidity sensor, whereby to enable the overall sensor arrangement to function, as shall now be describe with reference to Figure 7, which is a flow chart which operates in accordance with one system in accordance with the present invention. In the first instance, the seat sensor activates the system, upon placement of a child. With, preferably, a time delay, the harness buckle is connected and the straps are fastened; if this is not performed within five seconds, then an alarm will be raised by way of an aural, visual or other form of indicator; if performed within the delay period, then an alarm will not be raised. In the event that the child in the seat removes the buckle or an arm slips, for example, then the strap will become loose and the sensor will sense the flaccidity and will cause the alarm to be raised. Reconnection and/or refastening of the straps will cause the alarm to be deactivated. Upon unbuckling of the harness and removal of the child, the alarm, after any delay will not be raised or, if there is no delay, the alarm system will become quiet.

**0034** It will be appreciated by the skilled man that the invention can be implemented in many alternatives. It will be appreciated that a degree of looseness of a strap will vary in relation to a distance of unconstrained lateral length (UCLL) of strap as indicated with reference to Figures 5B and 6D, i.e. where a strap is not retained within a channel and is free to move laterally to the direction of tensioned force employed in retaining a child. Using a standard width 5cm (2") polyester webbing strap having a thickness of 0.1 - 0.12cm (0.0394 - 0.0472"), over an unconstrained lateral length of 15cm (6") it will be appreciated that a lateral force indicative of a slack web will differ from a lateral force over an unconstrained lateral of 10cm (4") and one skilled in the art would readily be able to fabricate a sensor capable of indicating a relaxation of a strap of webbing when not sufficiently tensioned. Equally it will be appreciated, however, that a slightly less robust strap could be configured such that a reduced force would indicate a similar degree of slackness worthy of garnering the tension of an adult within the car that the strap was loose. Again, a more substantial strap would require more force, but not necessarily in a linear relation to the width of strap. Notwithstanding this, one skilled in the art would be able to devise a suitable arrangement to ensure that a degree of slackness in a strap can be monitored - and an alarm be sounded when the force is below such a predetermined level, indicating insufficient tension leading to the conclusion that the strap is not done up or tensioned sufficiently. In another mode of indication of a state of the tension could be provided by an optical indicator, conveniently behind the back support of the child seat. When the strap is properly tensioned then a light beam from a light source such as a light emitting diode (LED) would be blocked from providing direct beam to an optical receiver placed opposite the LED albeit with the strap interposed therebetween. However, when the strap is not connected and or not tensioned to a sufficient amount, then a loose strap will sag and permit a greater degree of light to pass, whereby an alarm can be generated. In such a system, better performance can be achieved by the application of a bias orthogonal to the light beam and axial direction of the strap whereby when flaccid, it is ensured that the light beam can transmit a direct beam to the optical receiver element. The use of a light system could also be employed to provide an indication that the system is working.

**0035** It will be clear to the skilled man that the present invention can be determined in a number of ways, with the strap flaccidity being an easily determinable condition to sense. Whilst the system has been described with reference to a car seat, it will be apparent that the system can also be applied to strollers, buggies and similar types of perambulator - especially when forward facing seats do not necessarily permit a close observation of a child to be maintained at all time.

## Claims

1. A child seat system (10) for a vehicle having a child harness, with the harness comprising a plurality of straps (13, 14, 16) provided in at least a three-point harness system, the sensor (50) being arranged to detect when a selected strap is loose, whereby to assist in the alerting to a parent or carer that the harness is improperly fastened.

2. A child seat system for a vehicle according to claim 1, wherein the child seat system provides a warning whether it be audible, visual or otherwise.

3. A child seat system for a vehicle according to claim 1 or 2, wherein the harness comprises a plurality of straps provided in at least is a five-point harness system.

4. A child seat system for a vehicle according to any one of claims 1 - 3, wherein there is provided a sensor (52P) operable to detect the presence of a child within the seat.

5. A child seat system for a vehicle according to any one of claims 1 - 4, wherein there is provided a sensor operable to detect the coupling of a buckle.

6. A child seat system for a vehicle according to any one of claims 1 - 5, wherein the vehicle is selected from one of an automobile, a bus, a perambulator, carrycot or buggy.

7. A child seat system for a vehicle according to any one of claims 1 - 6, wherein the seat has a base and there is provided an ISOFix connector system, whereby to enable association of the seat with a vehicle having ISOFIX connection points.

8. A child seat system for a vehicle according to any one of claims 1 - 6, wherein the seat (10) is fastened to a vehicle seat by means of a seat belt associated with the vehicle.

9. A child seat system for a vehicle according to any one of claims 1 - 6, wherein the child seat (10) is fastened to a vehicle by means of an integral fastener associated with the child seat (10).

10. A child seat system for a vehicle according to any one of claims 1 - 6, wherein the child seat (10) is fastened to a vehicle by means of an integral fastener associated with the child seat (10), which integral fastener is provided with a strap fastener and a tension alarm.

11. A child seat system for a vehicle according to any one of claims 1 - 7, wherein at least one strap is tensioned in use to restrain movement of the child, the seat system having a tension indicator and an alarm, the tension indicator being operably arranged to apply a lateral force upon said strap, wherein upon a measurement of a predetermined reduction in said lateral force, being indicative of a reduction in tension of the strap, an alert can be indicated to a parent or carer occupant of the vehicle.

12. A child seat system for a vehicle according to any one of claims 1 - 7, wherein at least one strap is tensioned in use to restrain movement of the child, the seat system having a tension indicator and an alarm, the tension indicator being operably arranged to apply a lateral force upon said strap, wherein upon of a reduction in tension of the strap, in a sensor area, the tension indicator shift the strap orthogonally whereby an optical indicator is triggered whereby an alert can be indicated to a parent or carer occupant of the vehicle.

13. A child seat system for a vehicle according to any one of claims 1 - 7, wherein at least one strap is tensioned in use to restrain movement of the child, the seat system having an axial tension indicator and an alarm, the tension indicator being operably arranged to provide an alert upon the axial force tension of the strap being reduced by a predetermined amount, whereby to enable an alert to be made to a parent or carer occupant of the vehicle.
